# EUROPÄISCHE PATENTANMELDUNG

(11) **EP 0 684 451 A1**
(43) Veröffentlichungstag der Anmeldung: **29.11.1995**
(21) Anmeldenummer: 95105873.4
(22) Anmeldetag: 20.04.1995
(51) Int. Cl.: G01D 3/00, G01D 13/02, G01P 1/08, G01D 7/00, B60K 35/00

(54) **Anzeigevorrichtung für ein Fahrzeug**

(30) Priorität: 26.05.1994 DE 4418398
(71) Anmelder: ROBERT BOSCH GMBH, 70442 Stuttgart (DE)
(72) Erfinder: Knoll, Peter, Dr. Ing., D-76275 Ettlingen (DE)

(57) **Zusammenfassung**

Es wird eine Anzeigevorrichtung für ein Fahrzeug vorgeschlagen, die dazu dient, den gegenwärtigen Wert einer das Fahrzeug betreffenden Größe anzuzeigen. Die Anzeigevorrichtung weist einen Schrittmotor (1) auf, der einen Zeiger (3) über einem Zifferblatt (4) antreibt, wobei zwei Gruppen (12, 13) von Symbolen (5, 6) auf dem Zifferblatt (4) angeordnet sind, die jeweils auf einer Kreislinie (10, 11) liegen. Beide Gruppen (12, 13) dienen zusammen mit der Stellung des Zeigers (3) zur Ablesung des Wertes, wobei zwischen dem minimalen Drehwinkel (ß) des Zeigers (3) zur Anzeige des Minimalwerts und dem maximalen Drehwinkel (y) zur Anzeige des Maximalwerts der anzuzeigenden Größe eine Differenz von mehr als 360 besteht und der Zeiger (3) seine Drehrichtung bei einer streng monotonen Erhöhung vom Minimalwert zum Maximalwert beibehält.

## Beschreibung

### Stand der Technik

Die Erfindung geht aus von einer Anzeigevorrichtung für ein Fahrzeug nach dem Oberbegriff des Hauptanspruchs. Aus der DE 27 30 699 C2 ist eine Anzeigevorrichtung für ein Fahrzeug bekannt, bei der ein Schrittmotor zum Antrieb eines Zeigers verwendet wird, um eine mechanische Meßgröße des Fahrzeugs auf einer Skalenscheibe anzuzeigen. In der DE 38 34 229 C2 ist ein Tachometer offenbart, bei dem eine Doppelbenutzung eines Zifferblatts erfolgt, indem der anzuzeigende Meßwertbereich auf zwei Skalen aufgeteilt wird, die beide auf dem selben Zifferblatt angeordnet sind. Beim Überschreiten des höchsten Zahlenwerts der ersten Skala springt der Zeiger um einen bestimmten Drehwinkel zurück, um daraufhin die zweite Skala zur Anzeige für die weiteren Meßwerte zu nutzen. Eine umgekehrte Zeigersteuerung mit einer Hysterese wird verwendet, um von der Skala für die höheren Anzeigewerte wieder auf die Skala mit den niedrigen Anzeigewerten zurückzuspringen. Die Zeigerbeweglichkeit beschränkt sich dabei auf einen Winkel von ungefähr 220 °.

### Vorteile der Erfindung

Die erfindungsgemäße Anzeigevorrichtung mit den kennzeichnenden Merkmalen des Hauptanspruchs hat demgegenüber den Vorteil, daß sich aufgrund der Vorschrift, daß der Drehwinkel des Zeigers streng monoton mit dem anzuzeigenden Wert wächst und fällt, die Ansteuerung des Schrittmotors vereinfacht, da im gesamten Anzeigewertbereich keine Richtungsumkehr für den Zeiger vorgesehen werden muß. Außerdem wird aufgrund der Aufteilung des Anzeigewertbereiches in zwei oder mehrere Einzelanzeigewertbereiche mit jeweils zugeordneten Gruppen von Symbolen die Ablesbarkeit des gerade angezeigten Anzeigewerts verbessert, da grundsätzlich eine Proportionalität zwischen dem Drehwinkel und dem anzuzeigenden Meßwert besteht, was eine geringere Denkleistung von der ablesenden Person erfordert. Somit wird die Aufmerksamkeit der ablesenden Person, insbesondere eines Fahrzeuglenkers nicht für eine unnötig lange Zeit auf die Anzeigevorrichtung und die Ablesung gelenkt. Außerdem ist mit der Aufteilung des Anzeigebereichs für den anzuzeigenden Wert auf zwei oder mehr Symbolgruppen eine erhöhte Anzeigegenauigkeit und damit auch eine erhöhte Ablesegenauigkeit erreichbar. Anzeigeformen dieser Art kommen der eingeschränkten Perzeption älterer Autofahrer entgegen.

Durch die in den Unteransprüchen aufgeführten Maßnahmen sind vorteilhafte Weiterbildungen und Verbesserungen der im Hauptanspruch angegebenen Anzeigevorrichtung möglich.

Besonders vorteilhaft ist es, den Radius der weiteren Kreislinie für die weitere Gruppe von weiteren Symbolen kleiner oder größer als den Radius der ersten Kreislinie zu wählen, da dadurch auf einfache Weise die Zuordenbarkeit der Symbole zur jeweiligen Gruppe erhöht und damit die Ablesbarkeit des angezeigten Werts erhöht wird.

Es erweist sich außerdem als Vorteil, wenn eine Beleuchtungsvorrichtung so angesteuert wird, daß in Abhängigkeit vom Drehwinkel jeweils nur eine der Gruppen beleuchtet wird, da auch hiermit eine Verbesserung der Ablesbarkeit erzielt wird, indem die Aufmerksamkeit der ablesenden Person auf die beleuchtete Gruppe gelenkt wird.

Ebenso vorteilhaft ist es, eine Beleuchtungsvorrichtung anzuordnen, die in Abhängigkeit vom Drehwinkel des Zeigers ihre Farbe wechselt, so daß die ablesende Person anhand der Beleuchtungsfarbe eine Zuordnung zur jeweils gültigen Symbolgruppe treffen kann und so ein Ablesen des angezeigten Werts erleichtert wird.

Ebenfalls den Vorteil der vereinfachten und schnelleren Ablesbarkeit bewirkt die Ausgestaltung der Symbole in Gestalt von Zahlen, die den anzuzeigenden Wert unmittelbar wiedergeben, da für die ablesende Person keine zeitraubende Denkleistung für eine weitere Zuordnung zwischen den Symbolen und den zugehörigen angezeigten Werten erforderlich ist.

Wenn das Maß der Änderung des Drehwinkels von der Höhe des anzuzeigenden Werts abhängt, so ist es möglich, die Genauigkeit der Ablesbarkeit der Anzeigevorrichtung der Realität im Fahrzeugbereich in vorteilhafter Weise anzupassen, indem vorzugsweise für genau die anzuzeigenden Werte, bei denen eine hohe Auflösung erwünscht ist ein hohes Änderungsmaß und für genau die anzuzeigenden Werte, bei denen eine niedrige Auflösung erwünscht ist ein niedriges Änderungsmaß für den Drehwinkel vorliegt.

Die Erzeugung der Symbole auf einem LCD-Display und deren Ab- oder Anschaltung in Abhängigkeit vom Drehwinkel erhöht in vorteilhafter Weise ebenfalls die Ablesbarkeit, da immer genau die Symbole angeschaltet werden können, die für den anzuzeigenden Wert Gültigkeit besitzen und die Aufmerksamkeit der ablesenden Person nicht auf andere, gerade ungültige, Symbole gelenkt wird.

### Zeichnung

Ein Ausführungsbeispiel der Erfindung ist in der Zeichnung dargestellt und in der nachfolgenden Beschreibung näher erläutert. Es zeigen:
Figur 1 eine Anzeigevorrichtung mit Schrittmotor im Querschnitt,
Figur 2 eine Anzeigevorrichtung mit Schrittmotor in Draufsicht.

### Beschreibung des Ausführungsbeispiels

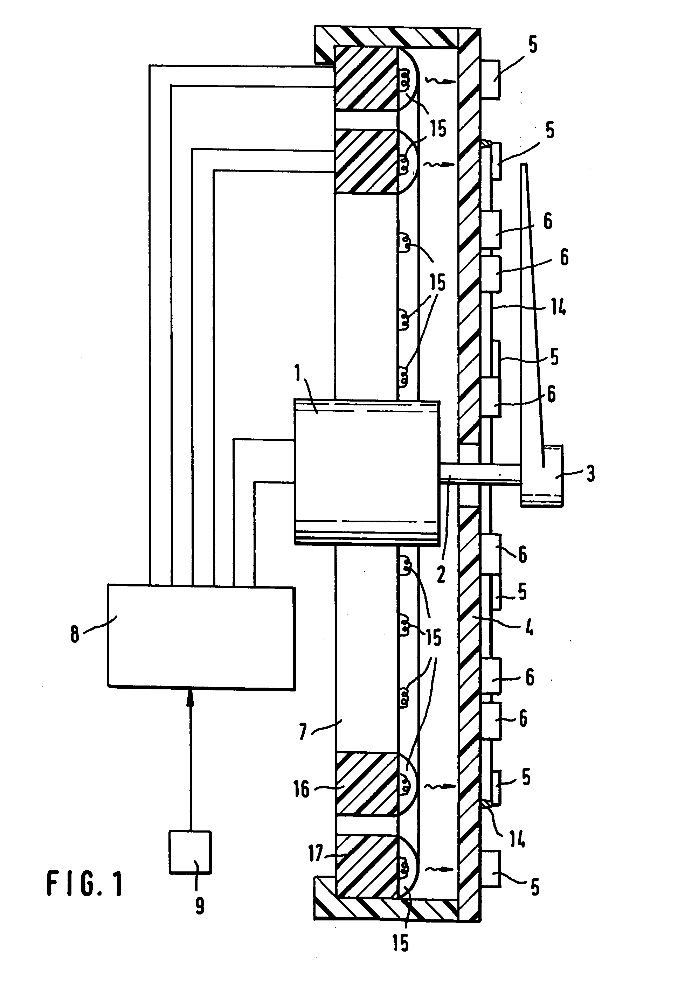

In Figur 1 ist eine Anzeigevorrichtung im Querschnitt dargestellt, mit einem Schrittmotor 1, der eine Welle 2 antreibt, auf der senkrecht zur Welle 2 ein Zeiger 3 angeordnet ist. Die Welle 2 durchstößt dabei ein Zifferblatt 4, so daß der Zeiger 3 über der Oberfläche des Zifferblatts 4 eine rotatorische Bewegung ausführt. Auf gleicher Ebene mit dem Schrittmotor 1 befindet sich eine Beleuchtungseinrichtung 7, die einen inneren Beleuchtungskörper 16 und einen äußeren Beleuchtungskörper 17 umfaßt, welche jeweils mit Glühwendeln 15 bestückt sind. Der Schrittmotor 1 und die Beleuchtungseinrichtung 7 werden von einer Steuereinrichtung 8 angesteuert. Ein Sensor 9 liefert dabei ein Eingangssignal an die Steuereinrichtung 8. Auf der dem Zeiger 3 zugewandten Seite des Zifferblatts 4 sind Symbole 5, weitere Symbole 6 sowie ein Skalenring 14 angeordnet.

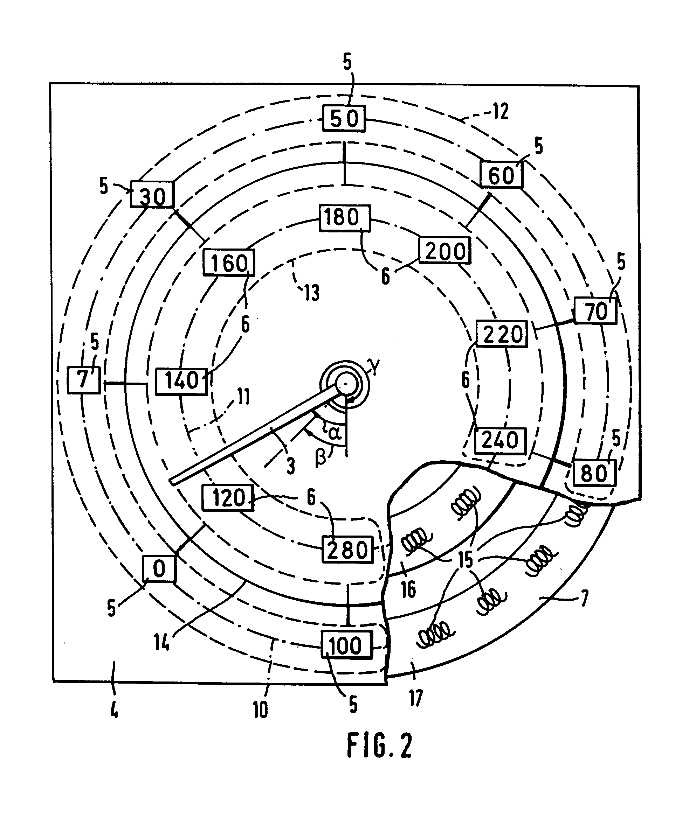

Der weitere Aufbau wird anhand der Figur 2 beschrieben:
Die Symbole 5 sind entlang einer ersten Kreislinie 10 gleichmäßig verteilt angeordnet. Ebenso sind die weiteren Symbole 6 entlang einer weiteren Kreislinie 11 gleichmäßig verteilt angeordnet. Der Radius der weiteren Kreislinie 11 ist dabei kleiner als der Radius der ersten Kreislinie 10. Die Symbole 5 bilden zusammen eine erste Gruppe 12. Ebenso bilden die weiteren Symbole 6 zusammen eine weitere Gruppe 13. Zwischen den beiden Kreislinien 10, 11 ist ein runder Skalenring 14 mit Markierungen angeordnet. Die Kreislinien 10, 11 und der Skalenring 14 sind konzentrisch um die Welle 2 als Mittelpunkt angeordnet. Die Beleuchtungskörper 16, 17 sind gleichfalls ringförmig, wobei sich die Kreislinie des inneren Beleuchtungskörpers 16 mit der weiteren Kreislinie 11 deckt und die Kreislinie des äußeren Beleuchtungskörpers 17 sich mit der ersten Kreislinie 10 deckt. Die Glühwendeln 15 sind gleichmäßig am Umfang der Beleuchtungskörper 16, 17 angeordnet. Der Zeiger 3 ist um einen Drehwinkel a ausgelenkt. Die Symbole 5, 6 sind hier beispielhaft in Form von Zahlen gestaltet, die ebenso beispielhaft für die Anzeige von Geschwindigkeitswerten dienen.

Ein üblicher Zahlenbereich für Geschwindigkeiten bewegt sich hierbei zwischen 0 und 280 km/h. Somit entspricht die Anzeige des niedrigsten Geschwindigkeitswerts der Zahl Null und damit einem minimalen Drehwinkel ß. Dieser beträgt hier 45°. Die Anzeige des höchsten Geschwindigkeitswerts 280 km/h entspricht andererseits dem maximalen Drehwinkel y, der hier 720 beträgt. Der Anzeigebereich für den gesamten Geschwindigkeitsbereich ist hierbei auf beide Gruppen 12, 13 verteilt, wobei der Anzeigebereich für den Geschwindigkeitsbereich zwischen 0 und 119 km/h der ersten Gruppe 12 zugeordnet ist und der Anzeigebereich für den Geschwindigkeitsbereich zwischen 120 und 280 km/h der weiteren Gruppe 13 zugeordnet ist. Der Zeiger 3 bewegt sich bei einer streng monotonen Geschwindigkeitserhöhung von 0 bis 280 km/h somit vom minimalen Drehwinkel ß bis zum maximalen Drehwinkel y. Dabei bewegt er sich von der Geschwindigkeit 0 km/h bis zur Geschwindigkeit 119 km/h vom Drehwinkel a = 45 zum Drehwinkel a = 405 _{°} um 360°. Ab einer Geschwindigkeit von über 120 km/h bewegt sich der Zeiger 3 über den Drehwinkel a von 405 hinaus. Zur Anzeige von 280 km/h bewegt sich der Zeiger 3 somit bis zum maximalen Drehwinkel y, der hier beispielhaft 720_{°} beträgt. Der Differenzwinkel zwischen dem Minimalwinkel ß und dem Maximalwinkel y beträgt somit y - ß = 675°. Zur Überstreichung dieses hohen Drehwinkeldifferenz wird die Zeigerbewegung des Zeigers 3 nicht, wie bei bekannten Anzeigevorrichtungen mit einem starren Anschlag begrenzt, sondern einfach über den bisher als maximal geltenden Drehwinkel a von 360 hinaus weiterbewegt. Dies kann auch über mehrmalige Umdrehungen von 360 hinweg geschehen.

Prinzipiell ist es dem Fahrer des Fahrzeugs ohne weiteres möglich, bereits ohne eine selektive Ansteuerung der Beleuchtungskörper 16, 17 eine Zuordnung der gerade gefahrenen Geschwindigkeit zum Zeigerausschlag und zur gerade gültigen Gruppe 12, 13 zu treffen, da sich die auf der selben Position des Zeigers 3 befindlichen Werte der ersten Gruppe 12 und der weiteren Gruppe 13 um einen so hohen Betrag unterscheiden, daß eine Verwechslung der beiden Werte nahezu ausgeschlossen ist. Zur Erleichterung der Ablesbarkeit ist aber auch vorgesehen, mittels der Steuereinrichtung 8 die Beleuchtungskörper 16, 17 wahlweise ein- oder auszuschalten, je nachdem, welche der beiden Gruppen 12, 13 gerade den richtigen Wertebereich für den anzuzeigenden Wert umfaßt. Die Steuereinrichtung 8 ist in ihrem Aufbau nicht näher dargestellt und umfaßt eine Einrichtung zum Erfassen des vom Sensor 9 gelieferten Signals und zu dessen Umsetzung in Ansteuersignale für den Schrittmotor 1 bzw. die Beleuchtungskörper 16, 17. Die Ansteuerung des Schrittmotors 1 erfolgt dabei über den gesamten Drehwinkelbereich mit einer streng monotonen Abhängigkeit vom anzuzeigenden Wert. Wie eine solche Ansteuerung mittels der Steuereinrichtung 8 erfolgen kann, ist bekannt und nicht Teil der Erfindung. Zu erwähnen ist, daß die Steuereinrichtung 8 einen Zähler umfassen muß, welcher die Anzahl der Überschreitungen des Drehwinkels a über Vielfache von 360 ° zählt, um ein korrektes Anzeigen zu ermöglichen. Zur Syrichronisation des Zeigers 3 beim Einschalten kann auch ein nur kurzzeitig wirksamer Anschlag vorgesehen sein. Alternativ dazu kann ein Anschlag vorgesehen werden, der nur eine Begrenzung des Drehwinkels a von höheren Werten gegen 0 bewirkt und keine den Drehwinkel a nach oben hin begrenzende Wirkung hat.

Anstelle der Glühwendeln 15 können ebensogut andere Leuchtkörper, z.B. Leuchtdioden, vorgesehen sein, oder auch nur wenige Leuchtkörper, deren Licht mittels eines entsprechend geformten Lichtleiters an den Bereich hinter den Gruppen 12, 13 geleitet wird. Es ist dabei nicht unbedingt nötig, daß sich die Radien der Kreislinien 10, 11 voneinander unterscheiden. Wenn beide Kreislinien 10, 11 übereinanderliegen, ist es aber vorteilhaft, eine selektive Beleuchtung der Gruppen 12, 13 bzw. derer Symbole 5, 6 vorzunehmen, so daß ein leichtes Ablesen des jeweils gültigen anzuzeigenden Wertes möglich ist. Die selektive Beleuchtung sollte vorzugsweise so gestaltet sein, daß bei Über- bzw. Unterschreiten eines vorgegebenen Grenzwinkels ein Umschalten der Beleuchtung erfolgt. Dabei ist es ebenso vorgesehen, anstelle von fest, z.B. in Form von gedruckter Farbe, installierten, beleuchteten Symbolen 5, 6 auch mittels einer LCD-Anzeige erzeugte Symbole 5, 6 zu verwenden. Mit einer solchen LCD-Anzeige können dann die jeweilig gültigen Symbole 5, 6 immer dann eingeschaltet sein, wenn die zugehörige Gruppe 12, 13 den anzuzeigenden Wert umfaßt. Als Alternative hierzu ist vorgesehen, daß die Beleuchtungsvorrichtung 7 so gestaltet ist, daß die Farbe des abgegebenen Lichts änderbar ist und daß die Farbe vorzugsweise genau dann zu einer Änderung angesteuert wird, wenn der angezeigte Wert den Wertebereich einer der Gruppen 12, 13 verläßt, um in den Wertebereich einer der anderen Gruppen 12, 13 einzutreten. Für die ablesende Person ist es dann bereits nach äußerst kurzer Eingewöhnungsphase möglich, anhand der Beleuchtungsfarbe zu erkennen, welche Gruppe 12, 13 gerade für den angezeigten Wert relevant ist. Anstelle von Zahlen können die Symbole 5, 6 ebensogut andere Formen, wie z.B. Piktogramme oder eine Anordnung von Punkten aufweisen, die geeignet sind, ein Ablesen des anzuzeigenden Werts zu ermöglichen.

Wenn die Änderung des Drehwinkels bei einer Änderung des anzuzeigenden Werts im Bereich nahe am Minimalwert groß ist und das Maß der Änderung mit steigendem anzuzeigenden Wert abnimmt, ist die Genauigkeit der Ablesbarkeit der Anzeigevorrichtung der Realität im Fahrzeugbereich in vorteilhafter Weise angepaßt, da für anzuzeigende Werte aus dem Fahrzeugbereich im unteren Anzeigewertbereich üblicherweise eine hohe Auflösung und im hohen Anzeigewertbereich üblicherweise eine niedrige Auflösung erwünscht ist. Im Fahrzeugbereich ist es zum Beispiel besonders wichtig, eine hohe Auflösung des niedrigen Geschwindigkeitsbereichs zu erhalten, während eine hohe Auflösung im hohen Geschwindigkeitsbereich nicht erwünscht ist. Daher ist diese Anzeigevorrichtung besonders geeignet für eine solche Anzeige, da eine entsprechende Auslegung der Steuervorrichtung 8 erfolgen kann, mittels derer unterschiedliche Drehwinkeländerungen für unterschiedliche Wertänderungen des anzuzeigenden Werts erzielbar sind. So ist, wie in Figur 2 beispielhaft dargestellt, eine besonders hohe Spreizung des Geschwindigkeitsbereichs zwischen 0 km/h und 30 km/h erreichbar) und eine nur sehr geringe Spreizung im Bereich ab 120 km/h. Ein weiterer Vorteil dieser Anzeigevorrichtung ist dadurch gegeben, daß die Gestaltung des Zifferblatts 4 einen großen Gestaltungsspielraum läßt, da an die Maße des Bewegungsraums des Zeigers 3 keinerlei beschränkende Anforderungen gestellt sind. Somit ist es insbesondere möglich, häufig auftretende Werte, die für den Fahrer besonders leicht ablesbar sein sollten, in Winkelpositionen des Zifferblattes 4 anzuordnen, die besonders markant sind. Solche Winkelpositionen sind üblicherweise die Drehwinkel a = 00, 90°, 180°, 270°, u.s.w. in Vielfachen von 90°. An zweiter Rangstelle folgen Winkelabstände von 45°. Die Anzeigevorrichtung, die hier beispielhaft für ein Tachometer beschrieben wurde, ist ebenso für die Anzeige von Drehzahlen, Temperaturen, Benzinstand und andere im Kraftfahrzeugbereich benötigte Werte geeignet.

## Patentansprüche

1. Anzeigevorrichtung für ein Fahrzeug mit einem Schrittmotor und einem vertikal zur Welle des Schrittmotors auf der Welle angeordneten Zeiger, dessen Drehwinkel zu einer veränderlichen, das Fahrzeug betreffenden, anzuzeigenden Größe, insbesondere der Fahrzeuggeschwindigkeit, proportional ist und mit einem Zifferblatt, auf dem mittels der Stellung des Zeigers und einer ersten Gruppe von auf dem Zifferblatt entlang einer ersten Kreislinie angeordneten Symbolen der gegenwärtige Wert der anzuzeigenden Größe ablesbar ist, dadurch gekennzeichnet, daß das Zifferblatt (4) wenigstens eine weitere Gruppe (13) von entlang einer, zur ersten Kreislinie (10) konzentrischen, weiteren Kreislinie (11) angeordneten weiteren Symbolen (6) aufweist, die zusammen mit der Stellung des Zeigers (3) gleichfalls zur Ablesung des gegenwärtigen Werts der anzuzeigenden Größe dienen, daß zwischen dem minimalen Drehwinkel (ß) zur Anzeige des Minimalwerts der anzuzeigenden Größe und dem maximalen Drehwinkel (y) zur Anzeige des Maximalwerts der anzuzeigenden Größe eine Winkeldifferenz von mehr als 360 besteht und daß der Zeiger (3) bei einer streng monotonen Erhöhung des Wertes der anzuzeigenden Größe vom Minimalwert bis zum Maximalwert seine Drehrichtung beibehält.

2. Anzeigevorrichtung nach Anspruch 1, dadurch gekennzeichnet, daß der Radius der weiteren Kreislinie (11) kleiner oder größer ist, als der Radius der ersten Kreislinie (10).

3. Anzeigevorrichtung nach Anspruch 1 oder 2, dadurch gekennzeichnet, daß das Zifferblatt (4) eine Beleuchtungsvorrichtung (7) aufweist, die in Abhängigkeit vom Drehwinkel (a) jeweils eine der Gruppen (12, 13) beleuchtet.

4. Anzeigevorrichtung nach Anspruch 1 oder 2, dadurch gekennzeichnet, daß das Zifferblatt (4) eine Beleuchtungsvorrichtung (7) aufweist, die ihre Farbe in Abhängigkeit vom Drehwinkel (a) wechselt.

5. Anzeigevorrichtung nach einem der Ansprüche 1 bis 4, dadurch gekennzeichnet, daß die Symbole (5, 6) Zahlen aufweisen, die den anzuzeigenden Wert wiedergeben.

6. Anzeigevorrichtung nach einem der Ansprüche 1 bis 5, dadurch gekennzeichnet, daß das Maß der Änderung des Drehwinkels (a) von der Höhe des gegenwärtigen anzuzeigenden Wertes abhängig ist.

7. Anzeigevorrichtung nach einem der Ansprüche 1 bis 6, dadurch gekennzeichnet, daß die Symbole (5, 6) auf einem LCD-Display erzeugbar sind und in Abhängigkeit vom Drehwinkel (a) an- oder abschaltbar sind.
